# EUROPÄISCHE PATENTSCHRIFT

(11) **EP 2 511 667 B1**
(45) Veröffentlichungstag und Bekanntmachung des Hinweises auf die Patenterteilung: **31.07.2019**
(21) Anmeldenummer: 12002625.7
(22) Anmeldetag: 13.04.2012
(51) Int. Cl.: G01D 11/30, G01N 23/20

(54) **Vorrichtung zum Positionieren eines Teils**
Device for positioning a section
Dispositif de positionnement d'une pièce

(30) Priorität: 13.04.2011 DE 102011016901
(43) Veröffentlichungstag der Anmeldung: 17.10.2012
(73) Patentinhaber: EITEL, Wolfgang, 96103 Hallstadt (DE)
(72) Erfinder: EITEL, Wolfgang, 96103 Hallstadt (DE)
(74) Vertreter: Küchler, Stefan

(56) Entgegenhaltungen:
- DE-U1-202008 012 489
- GB-A- 803 835
- US-A1- 2007 204 500
- Manfrotto: "Manfrotto 143F Gabelhalterung für Styropor", , 5. April 2007 (2007-04-05), XP055115085, Gefunden im Internet: URL:http://www.amazon.de/dp/B0015WRY56 [gefunden am 2014-04-24]
- Anonymous: "Manfrotto 143F Fork for Magic Arm 143F B&H Photo Video", , 1 January 2010 (2010-01-01), XP055403150, Retrieved from the Internet: URL:https://www.bhphotovideo.com/c/product /5182-REG/Manfrotto_143F_143F_Fork_for_Mag ic.html [retrieved on 2017-09-01]
- Phun Physics: "Phun Physics -Demonstrations Home Show Overview Demonstrations Topics Covered Scheduling Info Feedback", , 1 January 2000 (2000-01-01), XP055457438, Retrieved from the Internet: URL:https://web.archive.org/web/2001030618 3806/http://phun.physics.virginia.edu:80/d emos/nail_bed.html [retrieved on 2018-03-07]

## Beschreibung

Die Erfindung richtet sich auf eine Vorrichtung zur variablen, d.h. individuell einstellbaren Positionierung eines Teils, insbesondere eines zu untersuchenden oder zu vermessenden Probenkörpers, das/der vorzugsweise auf einem Probenhalter festgelegt ist, insbesondere im Rahmen einer Prüf-, Kontroll-, Meß- und/oder Untersuchungseinrichtung, mit einem Aufnahmeteil zur Abstützung des Probenhalters für das zu positionierende Teil.

Bei verschiedenen Prüf-, Kontroll-, Meß- oder Untersuchungsverfahren ergibt sich jeweils die Notwendigkeit, etwas zu positionieren.

Dabei folgt die Positionierung eines Teils im Rahmen eines Prüf-, Kontroll-, Meß- oder Untersuchungsverfahrens völlig anderen Grundsätzen als bei der Bearbeitung eines Werkstücks, insbesondere bei berührungslosen Prüf-, Kontroll-, Meß- oder Untersuchungsverfahren wie bspw. Röntgenverfahren, Computertomographieverfahren, Lasermeßverfahren, Ultraschallverfahren, Weißlichtscannerverfahren oder auch bei einer optischen Inspektion. Denn hierbei wirken keinerlei Kräfte auf das zu untersuchende Teil ein, so dass die Positionierungseinrichtung erheblich filigraner ausgestaltet sein kann als bei der Fixierung eines zu bearbeitenden Werkstücks.

Um zum Beispiel Teile zu röntgen oder mittels Computertomographie zu untersuchen, benötigt man eine Haltevorrichtung und/oder ein Trägermaterial, welche(s) eine geringere Dichte als das zu röntgende Teil hat, sowie eine Aufnahme, um diese an einer gewünschten Stelle, z. B. in einem Röntgengerät, zu positionieren.

Dafür kann ein Trägermaterial (im Folgenden auch als Probenträger bezeichnet) mit geringer Dichte verwendet werden, bspw. aus Styropor. Dieses Trägermaterial muss, abhängig von der kumulierten Wandstärke, eine für die Messung lagegerechte Position und einen festen Sitz des Teils während der gesamten Untersuchunsdauer gewährleisten, als Voraussetzung für gute Ergebnisse der Röntgenuntersuchung. Dafür muss das Trägermaterial angepasst, d.h. bearbeitet werden und anschließend mit einer Aufnahme verbunden werden, z. B. mit doppelseitigem Klebeband.

Die zumeist metallische Aufnahme wird direkt in der Maschine oder auf einem Adapter, welcher von dem Hersteller des betreffenden Geräts, bspw. Röntgengeräts, abhängig ist, ausgerichtet und fixiert.

Um das Trägermaterial, z. B. Styropor, an ein zu röntgendes Teil anzupassen, muss es bearbeitet werden. Da das Anfertigen von Trägern aus z. B. Styropor, welche eine optimale Positionierung und einen sicheren Halt gewährleisten müssen, relativ komplex ist, lassen sich derartige Träger oft nur schwer anfertigen und sind also nur bedingt realisierbar. Denn Styropor lässt sich schlecht, schwer und nur mit scharfen oder heißen Werkzeugen wie z. B. mit Teppichmessern, Heißdraht-Schneidegeräten und obendrein nur grob bearbeiten. Durch das Bearbeiten mit Hitze, im zu untersuchenden Bereich, wird die bearbeitete Fläche bei bestimmten Teilen unbrauchbar, weil dadurch eine Veränderung der Dichte entsteht. Bei der Bearbeitung des Trägermaterials besteht zudem eine hohe Verletzungsgefahr, die Anfertigung ist zeitaufwändig, man benötigt handwerkliches Geschick, und muss oft improvisieren, was die Herstellung einer Mehrfachaufnahme, welches eine erhöhte Auslastung der sehr teuren Gerätschaften sinnvoll macht, um so schwieriger und zeitaufwändiger macht. Beim Befestigen des Trägers auf der Aufnahme mittels doppelseitigen Klebebands benötigt man stets ein neues Klebematerial, welches vor jeder Befestigung auf der Aufnahme neu angebracht und anschließend wieder entfernt werden sollte. Dies ist zeitaufwändig, mühsam und kostet Klebematerial.

Die zu klebende Styroporfläche muss, um eine gute und sichere Verbindung zwischen Aufnahme und Träger gewährleisten zu können, plan / eben sein. In der Praxis führt die unvermeidbare, auch nur geringfügige Welligkeit der Grundfläche dazu, dass diese sich lokal vom Klebeband abhebt und dadurch, über die nur noch verbleibenden Klebestrecken, die mechanische Stabilität der Befestigung des Probenhalters auf der Grundscheibe infrage stellt. Eine im Zuge ihrer Drehung in der Computertomographie etwa wackelnde Probe macht die Messung unbrauchbar. Ist dies nicht der Fall, so kann dies zur ungewollten Lösung des Trägermaterials kommen, was zu Verwackelungen führt. Wird dies bei der Endkontrolle bemerkt, muss das Trägermaterial noch einmal nachgearbeitet werden. Kommt es während der Messung zu einem ungewollten Lösen des Trägers von der Aufnahme oder ist das Teil ungenügend auf dem Träger fixiert, kann dies zu einer ungewollten Positionsveränderung des Teiles führen, wodurch falsche Ergebnisse erzeugt und weiter verarbeitet werden. Bemerkt man solches, muss nach einer Optimierung der Vorrichtung der Vorgang wiederholt werden.

Zur Verarbeitung muß die Kontaktfläche des Schaumstoffs gut vorgearbeitet sein, d.h. eben und fettfrei. Sodann werden Klebstreifen geschnitten und angeklebt. Die Probe oder ein Probenhalter wird aufgedrückt und muß nach erfolgter Messung wieder entfernt werden, wie schließlich auch der Klebestreifen. Diese Schritte müssen bei jeder neuen Messung wiederholt werden, was sehr zeitaufwändig und lästig ist. Eine flexible Positionierung ist nicht möglich. Die Probe bzw. der Probenhalter kann sich während der Messung lösen, was zu Fehlmessungen führt. Solchenfalls müssen die Klebestreifen von der Grundplatte entfernt werden. Positionskorrekturen sind nur durch Wiederholen der zuvor genannten Schritte möglich Ferner können nicht alle Arten von geschäumten Materialien verwendet werden, z.B. kein Blumensteckschaum. Ähnliche Nachteile ergeben sich bei Verwendung anderer Klebstoffe.

Aus den Nachteilen des beschriebenen Standes der Technik resultiert das die Erfindung initiierende Problem, eine Vorrichtung bereitzustellen, bei welcher auf möglichst einfache Weise eine flexible und gleichzeitig stabile und sichere Verbindung zwischen einem bspw. geschäumten Probenträger einerseits und einer diesen abstützenden Trägeraufnahme andererseits gewährleistet werden kann.

Die Aufgabe wird bei einer erfindungsgemäßen Vorrichtung entsprechend dem unabhängigen Anspruch 1, beziehungsweise einem erfindungsgemäßen Verfahren entsprechend Anspruch 14 dadurch gelöst, dass die Probeaufnahme eine Mehrzahl von Dornen aufweist, welche sich von einem Basisteil weg erstrecken und die einseitig frei enden, so dass darauf der Probenträger aufsteckbar ist. Dabei können die Dorne etwa die Geometrie nagelförmiger Stifte aufweisen.

Bei der neuen Vorrichtung wird durch ein Aufstecken geschäumter Trägermaterialien auf die Aufnahme ein einfaches, schnelles, flexibles Positionieren des Trägers ermöglicht, denn die Stifte dringen klemmend in das geschäumte Trägermaterial ein und liefern durch die Haftreibung ihrer Mantelflächen eine mechanisch zuverlässige Verbindung zwischen Trägermaterial und Aufnahme, aber gleichzeitig auch ein durch Zugbeanspruchung problemlos auch wieder lösbare Verbindung. Dies führt zu verlässlichen Resultaten.

Für die Verbindung wie auch im Fall einer Versetzung des Trägermaterials wird zur neuen Positionierung kein Klebematerial auf der Aufnahme benötigt, welches dafür jedes Mal angebracht und wieder entfernt werden müßte, und die Gefahr einer ungewollten Lösung des Trägermaterials von der Aufnahme ist minimiert.

Die Verbindungsflächen müssen nicht speziell bearbeitet werden, was Zeit- und Materialersparnisse mit sich bringt. Durch diese Vorteile ist auch eine Automatisierung der Positionierung denkbar. Bei der Erfindung braucht die Kontaktfläche der Probe / des Probenträgers nur grob vorgearbeitet zu sein. Die Probe bzw. der Probenhalter wird auf den Aufnehmer in der gewünschten Position aufgesteckt. Durch ein nur grobes Vorarbeiten der Probenträgerkontaktfläche ergibt sich eine erhebliche Zeitersparnis. Dabei kann die Probe bzw. der Probenträger in jeder beliebigen Position gesteckt werden. Eine Positionskorrektur ist jederzeit kinderleicht machbar. Ferner wird kein Klebematerial benötigt, und nach der Messung kann der Probenhalter einfach wieder abgezogen werden. Dabei verbleiben keine Klebereste am Probenträger. Schließlich können fast alle geschäumten Materialien verwendet werden.

Die erfindungsgemäße Vorrichtung kann alleine oder mit einer Grundplatte über einen Adapter oder direkt im Gerät positioniert werden, bspw. auf einem Drehtisch desselben; die jeweilige Montagetechnik ist abhängig vom Hersteller der Prüf-, Kontroll-, Meß- oder Untersuchungseinrichtung.

Die erfindungsgemäße Vorrichtung kann mindestens mittels Magneten mit einer Grundplatte verbunden werden und beispielweise auch durch Verschrauben, Kleben, Verstiften, welche auf einem Adapter oder direkt auf einem Drehtisch positioniert werden kann, je nach den Vorgaben des Herstellers der Prüf-, Kontroll-, Meß- oder Untersuchungsapparatur.

Bei Verwendung eines Adapters kann die Verbindung zwischen dem Adapter und der erfindungsgemäßen Vorrichtung ebenfalls auf unterschiedlichem Weg zusätzlich zu magnetisch erfolgen, bspw. durch Einpassungen, Verstiften, durch Verschrauben od. dgl. Es hat sich als günstig erwiesen, dass mehrere oder alle Dorne parallel zueinander verlaufen. Dadurch wird das Aufstecken eines Trägers erleichtert. Allerdings können ein oder mehrere Dorne nicht parallel zu den anderen verlaufen, sondern schräg oder gar quer dazu.

Mehrere oder alle Dorne sind in einem regelmäßigen Raster angeordnet. Es kann sich hierbei um ein quadratisches Raster handeln, ähnlich der Kreuzungspunkte der Linien in einem Kreuzworträtsel, oder um ein dreieckiges Raster, ähnlich der Kreuzungspunkte der Linien in einem Halmaspiel, oder in Form eines kreisförmigen Rasters, wobei sich die Dorne an den Kreuzungspunkten konzentrischer Kreise mit von dem Zentrum der Kreise in allen Richtungen weg strebenden Strahlen befinden. Darüber hinaus sind aber auch unregelmäßige Anordnungen denkbar.

Weitere Vorteile ergeben sich dadurch, dass mehrere oder alle Dornen einen Schaftbereich aufweisen mit einem im Wesentlichen konstanten Querschnitt. Dabei kann der Querschnitt tatsächlich konstant sein, so dass sich die Gestalt von Stiften mit glatten Schäften ergibt, oder die Form eines konischen Dorns haben, oder in der Mantelfläche können Strukturen eingearbeitet sein, bspw. rundum laufende Rillen, so dass sich beim Aufstecken eines geschäumten Materials eine erhöhte Reibung oder gar Verrastung ergibt, die einem selbsttätigen Verschieben einen größtmöglichen Widerstand entgegensetzt. Eine ähnliche Wirkung kann auch erzielt werden, wenn die Dorne in ihrem Schaftbereich ein rundum laufendendes Gewinde aufweisen, ähnlich wie bei Schraubenschäften. Dieses Gewinde sollte allerdings nicht zu sehr ausgeprägt sein, damit das Aufstecken nicht allzu sehr behindert wird. Bewährt hat sich bspw. ein Gewinde, wobei die Vertiefung zwischen zwei benachbarten Gewindesteigungen erheblich geringer ist als der Schaftdurchmesser oder auch als der Schaftradius, bspw. wenn die Vertiefung zwischen zwei benachbarten Gewindesteigungen kleiner ist als 2 Millimeter, vorzugsweise kleiner als 1,5 Millimeter, insbesondere kleiner als 1 Millimeter. Dabei kann der Querschnitt des Schaftes oder Schaft-Grundkörpers auch von einer Kreisform abweichen und bspw. auch eckig oder gar kreuz- oder sternförmig sein.

Ferner empfiehlt die Erfindung, dass ein, mehrere oder alle Dorne eine spitze, scharfkantiges oder zumindest ein gerundetes Ende einerseits und am gegenüberliegenden Ende vorzugsweise eine kopfartige Verbreiterung, Verdickung oder anderweitige Maßnahme aufweist, welche der Verankerung in einem Basisteil dient. Mit einer solchen Verbreiterung soll erreicht werden, dass die Dorne sich weder durch Rütteln noch durch Drehen aus dem Basisteil lösen können. Dazu ist es vorteilhaft, wenn die kopfartige Verbreiterung oder Verdickung von einem Teil des Basisteils vollständig übergriffen wird.

Es liegt im Rahmen der Erfindung, dass mehrere oder alle Dorne in ihrem Schaftbereich etwa gleiche Querschnitte aufweisen, bspw. kreisförmige Querschnitte mit einem Durchmesser von 0,2 mm oder mehr, vorzugsweise von 0,5 mm oder mehr, insbesondere von 1,0 mm oder mehr, und/oder mit einem Durchmesser von 20 mm oder weniger, insbesondere mit einem Durchmesser von 7 mm oder weniger, insbesondere mit einem Durchmesser von 5 mm oder weniger.

In einer weiteren vorteilhaften Ausführungsform der Erfindung können die Dornen sich nach oben hin verjüngen und beispielsweise konisch oder kegelartig geformt sein.

Um die zum Aufdrücken des Probenträgers erforderliche Kraft zu begrenzen, sollten Dorne mit glatten Mantelflächen vorgesehen sein. Dorne mit strukturierten Oberflächen führen eine Stabilisierung einer eingestellten Position bzw. Eindrücktiefe herbei und sollten daher ebenfalls vorhanden sein.

Ferner können Dorne mit unterschiedlicher Längen vorgesehen sein, so dass beim Aufdrücken nicht gleichzeitig alle Dorne in den Probenträger eindringen müssen und eine dementsprechend reduzierte Krafteinwirkung zu Beginn des Aufdrückens noch ein Feinjustieren des Probenträgers ermöglicht.

Im Rahmen der Erfindung können mehrere oder alle Dornen gleiche Längen aufweisen, bspw. Längen von 2 mm oder mehr, vorzugsweise von 5 mm oder mehr, insbesondere von 10 mm oder mehr, und/oder Längen von 200 mm oder weniger, vorzugsweise von 100 mm oder weniger, insbesondere von 70 mm oder weniger. Gerade in einem Raster ist es allerdings auch denkbar, verschiedene Dorne unterschiedlich lang auszuführen, bspw. jeden zweiten Dorn zu verkürzen, so dass sich die zum Aufstecken erforderliche Druckkraft im Verlaufe der Steckbewegung allmählich steigert, weil die Anzahl der interagierenden Dorne steigt. Es ist auch denkbar, die Höhe der Dorne zum Rand hin abnehmen zu lassen, bspw. nach Art einer Kalottenfläche, auf welcher einige oder alle Dornspitzen liegen.

Vorzugsweise sind über die tragende Platte jedoch Dorne von unterschiedlichen Längen verteilt angeordnet, insbesondere von zwei oder drei verschiedenen Längen verteilt. Das erbringt den Vorteil, zunächst unter Positionieren des Probenhalters mit nur geringem Andruck die längeren Stifte in diesen eindringen zu lassen, um dann, nach so erfolgter Positionierung, den Druck zum Eindringen auch der anderen (kürzeren) Stifte erhöhen zu können, ohne das dabei der Probenträger noch ungewollt ausweichen kann. Zur Verbesserung der erfindungsgemäßen Eigenschaften können jeweils Dorne gleicher Länge in einem Raster angeordnet sein, wobei mehrere derartige Raster miteinander verschränkt sein können, oder einzelne Dorne unterschiedlicher Länge sind an verschränkten Positionen eines gemeinsamen Rasters angeordnet.

Bevorzugt weisen längere Dorne glatte, kürzere Dorne profilierte Mantelflächen auf. Dies hat zur Folge, dass die Andrückkraft während der Ausrichtphase relativ niedrig ist, während am Schluß auch die eine Arretierung der eingestellten Position bewirkenden Dorne mit strukturierten Mantelflächen in Eingriff gelangen und schließlich den Probenträger unverrückbar festhalten und abstützen.

Zum Schutz vor Verletzungen können die vom Basisteil wegstehenden Enden abgestumpft, verrundet werden, aber auch ein Anbringen von Schutzmechanismen bspw. einer Abdeckung oder 2 zur Seite weichende Halbschalen oder Andere, können zum Schutz beitragen.

Mehrere oder alle Dornen sollten aus einem festen Material bestehen, insbesondere aus Metall oder Kunststoff sein.

Ferner sieht die Erfindung vor, dass mehrere oder alle Dorne aus einem nichtrostenden Material bestehen oder einen Korrosionsschutz aufweisen, bspw. aus Zink oder Messing.

Mehrere oder alle Dorne sind fest mit dem Basisteil verbunden, insbesondere teilweise darin eingebettet. Ein solcher Formschluß ist die intensivste Art der Verbindung. Eine Relativbewegung zwischen Stiften und Basisteil ist nicht vorgesehen.

Die Dorne sind fest mit dem Basisteil fest verbunden, vorzugsweise teilweise darin eingebettet, insbesondere mit ihren rückwärtigen Enden eingegossen, vorzugsweise in Kunststoff, insbesondere in eine Platte aus Kunststoff. Eine besonders intensive Art der Verbindung erhält man auch, wenn Dornen und Basisplatte durch möglichst gleichzeitiges Gießen oder Spritzen hergestellt werden. Andererseits läßt sich ein Formschluß auch dadurch bewirken, dass nagel- oder stiftförmige Dorne durch eine Lochplatte gesteckt und darin eingeklebt, eingeklemmt oder eingepreßt werden. Sowohl beim Einkleben als auch beim Einbetten können die freien Stirnseiten verbreiterter (Nagel-) Köpfe von dem Formschluß ausgenommen sein; dennoch können diese solchermaßen freiliegenden Stirnseiten bspw. in einer gemeinsamen Flucht mit der Unterseite der betreffenden, zur Verankerung dienenden Platte liegen.

Eine weitere Konstruktionsvorschrift besagt, dass das Basisteil eine Platte umfaßt, die einen entlang ihres Umfangs umlaufenden Kragen aufweist / aufweisen kann. Ein solcher Kragen, der vorzugsweise nach oben ragt, kann verwendet werden, um von einem zu messenden Probenteil herabtropfende Flüssigkeiten, bspw. Öl, aufzufangen.

Ferner kann das Basisteil eine Platte mit Befestigungseinrichtungen umfassen, insbesondere an ihrer den Dornen abgewandten Grundfläche. Bei diesen Befestigungseinrichtungen kann es sich bspw. um Bohrungen für Schrauben handeln, oder bspw. um Permanentmagnete.

Zur Erleichterung der Ausrichtung mehrerer oder aller Dornen vor dem Einbetten schlägt die Erfindung vor, dass diese von einer Schablone gehalten sind.

Bevorzugt weist das Basisteil eine kreisscheibenförmige Gestalt auf, bspw. mit einem Durchmesser von 1 cm oder mehr, vorzugsweise von 2 cm oder mehr, insbesondere von 5 cm oder mehr, und/oder mit einem Durchmesser von 100 cm oder weniger, vorzugsweise von 50 cm oder weniger, insbesondere von 20 cm oder weniger.

Die Höhe eines kreisscheibenförmigen Basisteils kann zwischen 2 mm und 70 mm liegen, vorzugsweise zwischen 3 mm und 50 mm.

Um vollflächig und wackelfrei auf einer Montagfläche oder einem Drehtisch oder einem Adapter od. dgl. aufzuliegen, sollte das Basisteil eine ebene Unterseite aufweisen. Diese ist vorzugsweise poliert, um ein leichtgängiges Verschieben zu ermöglichen.

Das Basisteil kann eine Grundplatte aus einem steifen und schweren Material aufweisen, vorzugsweise aus einem anorganischen Material wie bspw. aus Metall oder Stein.

Bevorzugt umfaßt das Basisteil eine vorzugsweise oberseitige Schicht oder Platte, worin die Dorne eingebettet sind. Durch ein solches Einbetten, d.h. Umfließen durch das noch flüssige Einbettungsmaterial, wird ein besonders inniger Formschluß erzielt.

Da das Basisteil zumindest bereichsweise aus einem organischen Material besteht, vorzugsweise aus Kunstharz, insbesondere aus einem Gießharz, können die vorzugsweise stiftförmigen Dorne direkt eingebettet werden. Diese stiftartigen Dorne können ähnlich wie Nägel ausgebildet sein, d.h. mit einer ihrer Spitze abgewandten Verbreiterung, bspw. in Form eines vorzugsweise flachen Kopfes.

Die Erfindung erfährt eine weitere Optimierung dadurch, dass das Basisteil einen zweilagigen Aufbau aufweist. Dabei kann erfindungsgemäß vorgesehen sein, dass sich oberhalb einer Schicht aus einem anorganischen Material eine Schicht aus einem organischen Material befindet. Diese Schichten sollten parallel zueinander verlauf und in möglichst innigem, vollflächigen Kontakt miteinander stehen.

Zu diesem Zweck sollten die Schichten aus organischem und anorganischen Material flächig miteinander verbunden sein, insbesondere dadurch, dass die organische Schicht direkt auf oder an der anorganischen Schicht ausgeformt ist. Andererseits ist es auch möglich, diese Schichten getrennt voneinander herzustellen und anschließend miteinander zu verbinden, bspw. mittels kurzer, beide Schichten zumindest teilweise durchsetzender Schrauben.

Weiterhin empfiehlt die Erfindung, dass das Basisteil einen rundumlaufenden, erhabenen Rand aufweist, vorzugsweise in Form eines Tropfschutzbordes. Ein relativ flacher, aber dennoch erhabener Rand läßt sich bei Verwendung einer geeigneten Kombination aus Gießharz und (Umfangs-) Form für dessen Formgebung, insbesondere einer Kombination, wobei die (Umfangs-) Form von dem Gießharz benetzt wird, relativ leicht herstellen. Ein höherer Rand könnte dagegen durch Anbringen eines erhabenen Ringes oder Rohres an dem Basisteil hergestellt werden. Falls größere, ggf. feuchte oder nasse Teile tropfgeschützt platziert werden sollen, kann ggf. zwischen Basisteil und Montage- oder Grundplatte der Boden eines schüsselartigen Auffanggefäßes oder einer Schlauchfolie eingelegt oder eingeklemmt werden, ggf. unter Einfügung eines oder mehrerer abdichtender Ringe, bspw. O-Ringe.

Das Basisteil oder die Grundplatte kann auch eine Zentrierhilfe aufweisen, so dass seine eigene Positionierung, aber auch die Positionierung des eigentlich zu messenden oder zu untersuchenden Teiles, erleichtert wird.

Das Basisteil ist auf einer Grund- oder Montageplatte, auf einem Drehtisch oder einem Adapter oder direkt in der betreffenden Meß- und/oder Untersuchungseinrichtung montierbar und ist zu diesem Zweck mit geeigneten Anschluß- bzw. Montagemitteln versehen. Es handelt sich hierbei mindestens um Magnetkörper, plus optionell Schraub- oder Klemmmittel oder um jede andere Art eines (vorzugsweise lösbaren) Befestigungsmittels.

Es wurde schon erwähnt, dass das Einschnitzen der Kontur für das Einklemmen oder Auflegen der Probe in bzw. auf einen Styroporblock vergleichsweise arbeitsaufwändig ist; und gewöhnlich ist ein derart geschnitzter Polystyrol-Schaumstoffkörper danach für keine Probe anderer Kontur mehr zu verwenden. Gemäß einem zusätzlichen Aspekt vorliegender Erfindung wird nun als Probenhalter ein aus geschäumten Zellen bestehender Schaumstoffblock verwendet, bspw. aus einem aufgeschäumten, säuregehärteten Phenol- oder Resolharz, und bei welchem die Zellen durch mechanisches Bearbeiten zerfallen. Das zu positionierende Teil wird auf dem Träger auflegbar und/oder gar in die Oberfläche des Trägers eindrückbar. Dabei ist der Träger durch ein Eindrücken des Teils verformbar, so dass er anschließend einen Reibschluß mit dem eingedrückten Teil ausbildet. Es entsteht ein Abdruck der Probe im Schaum, sie wird eingebettet und dadurch dort zuverlässig gehalten. Dadurch ist es möglich, darauf folgende gleiche Proben, wieder exakt gleich zu positionieren und man erspart sich weitere Ausrichtungen. Desweiteren kann eine andere Probe ebenso in die Oberfläche des Schaumstoffblocks eingedrückt werden, erforderlichenfalls nach bloßem Abtragen der zuvor verformten/ zerfallenen Schicht. Für diesen Probenhalter brauchen die Stifte des Aufnehmers nicht einmal angespitzt zu sein, sie drücken sich auch stumpf problemlos in den Schaumstoffkörper ein, was Verletzungsgefahren an den Spitzen des Aufnehmers unterbindet.

Schließlich entspricht es der Lehre des Verfahrens der Erfindung, dass der Träger aus einem geschäumten Material besteht, bei welchem die Zellen durch mechanische Beanspruchung, z.B. durch Druck, zerstört werden, und/oder welches aus dem Grundmaterial Phenolharz oder Resolharz hergestellt ist, vorzugsweise durch Schäumen und ggf. Säurehärtung.

Die Erfindung ist nachstehend näher erläutert, sowie anhand der beigefügten Zeichnung. Hierbei zeigt:

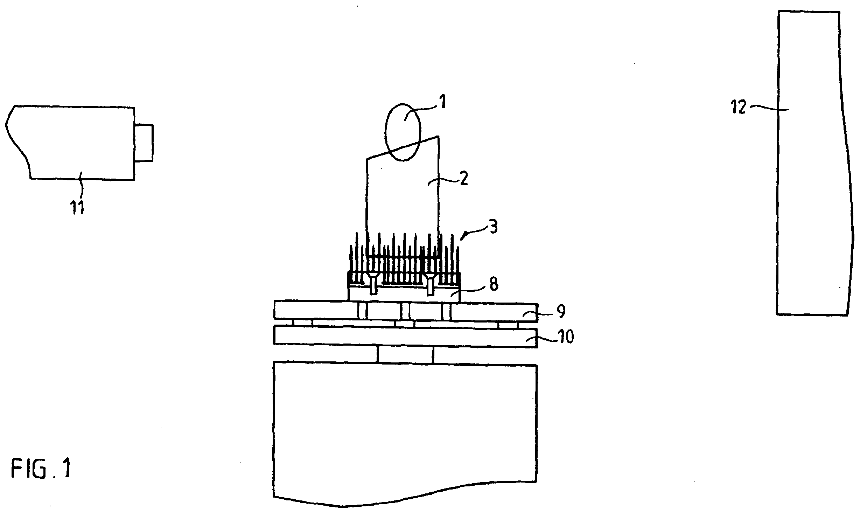

- Fig. 1: eine Einrichtung zur computertomographischen Untersuchung eines Probenkörpers in der Seitenansicht, teilweise abgebrochen, wobei der vereinfachte Aufbau eines CT-Röntgengerätes (Computertomographie) schematisch wiedergegeben ist, und wobei als wesentlicher Bestandteil der erfindungsgemäßen Vorrichtung eine Trägeraufnahme zur Abstützung eines Probenträgers, welcher den zu röntgenden Probenkörper trägt, zu erkennen ist; sowie

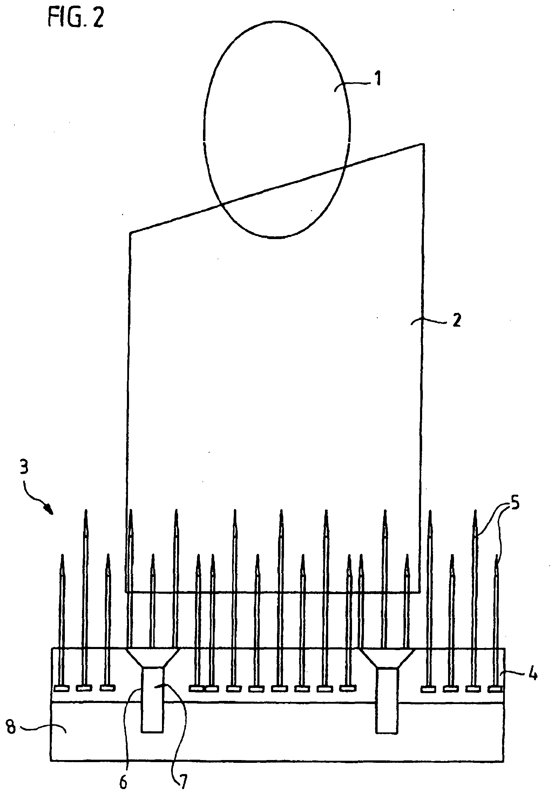

- Fig. 2: den Probenkörper samt Probenträger und Trägeraufnahme gemäß Fig. 1 in einer vergrößerten Darstellung.

Als zu positionierendes Teil wird ein Probenkörper 1 verwendet, der unmittelbar an einem Trägermaterial - im Folgenden auch als Probenträger 2 bezeichnet - festgelegt ist. Für den Probenträger 2 kann bspw. Schaummaterial verwendet werden, vorzugsweise ein geschäumtes, insbesondere säuregehärtetes Phenol- oder Resolharz. Ein derartiger Phenol- oder Resolharz-Schaum hat den Vorteil, dass er sich durch leichtes Eindrücken verformt und dadurch mit handelsüblichen Werkzeugen, z. B. einer Spachtel, Tapetenmesser, also relativ stumpfen Werkzeugen, leicht bearbeitet werden kann. Desweiteren wird durch Eindrücken des zu messenden Teiles, eine sichere und dennoch flexible, d.h. leicht veränderbare Fixierung erreicht.

Um das ggf. vorgearbeitete Material des Probenträgers 2 seinerseits zu stabilisieren bzw. ortsfest zu fixieren, dient eine erfindungsgemäße Trägeraufnahme 3.

Diese umfaßt ein plattenförmiges Basisteil 4, die unterschiedliche Größen, Formen und Farben aufweisen kann; bevorzugt wird eine kreisrunde Umfangsform mit einem

Durchmesser von ca. 1 cm bis ca. 70 cm, bspw. aber auch eine quadratische Umfangsform mit einer Kantenlänge von ca. 1 cm bis ca. 70 cm. Die Stärke eines solchen plattenförmigen Basisteils 4 liegt vorzugsweise in einem Bereich von ca. 2 mm bis ca. 70 mm. Zusätzlich zu einem mindestens bereichsweise organischen Material besteht das Basisteil 4 bevorzugt aus einem metallischen Material oder aus einem Kunststoff, insbesondere Kunstharz od. dgl. Die Unterseite sollte eben und/oder glatt sein. Bevorzugt - insbesondere bei entsprechenden Vorgaben durch den Hersteller einer Prüf-, Kontroll-, Meß- oder Untersuchungseinrichtung - ist das Basisteil aus einem magnetischen oder magnetisierbaren Material hergestellt und ist nach der Erfindung immer mit Magneten (Permanent- und/oder Elektromagneten) versehen, so dass es auf einer ebenfalls magnetischen oder magnetisierbaren Unterlage verschoben/fixiert werden kann. Andererseits ist es auch möglich, das Basisteil nicht magnetisch auszuführen. Von diesem Basisteil 4 ragen etwa lotrecht zu ihrer Grundebene mehrere Dorne 5 weg, die vorzugsweise an ihrem freien Ende in je eine Spitze, Kante od. dgl. Verjüngung münden. Diese Dorne 5 können bspw. die Gestalt von spitzen oder konischen Dornen oder abgeschrägten Stiften oder Nägeln aufweisen. Die Dorne 5 können aus unterschiedlichsten Materialien bestehen und unterschiedliche Formen aufweisen, mit Längen von ca. 5 mm bis ca. 200 mm und Durchmessern von ca. 0,5 mm bis 20 mm. Obwohl die Dorne 5 gleich lang oder aus mehreren Größen gemischt sein können, werden im Allgemeinen Dorne 5 mit unterschiedlichen Längen bevorzugt, bspw. zwei oder drei Arten von Dornen 5, bspw. Dorne 5 mit Längen von 20 mm einerseits und Dorne 5 mit Längen von 40 mm andererseits, so dass deren sämtliche Spitzen nicht innerhalb einer gemeinsamen Ebene liegen.

Die Dorne 5 sind mit dem plattenförmigen Basisteil 4 fest verbunden. Dies kann evtl. durch Schrauben erfolgen. Bevorzugt werden die Dorne 5 jedoch in das plattenförmige Basisteil 4 oder in eine an dieser festlegbaren Platte eingegossen, bspw. mittels eines Kunstharzes, insbesondere Gießharzes. Es ist auch denkbar, die Dorne 5 durch eine (Loch-) Schablone zu positionieren und anschließend zu umgießen, dabei läßt sich erreichen, dass alle Dorne 5 in einem exakten Raster liegen. Eine andere Art der Befestigung insbesondere nagelförmiger Dorne mit einem verbreiterten Kopf kann dadurch bewirkt werden, dass diese durch eine Lochplatte hindurchgesteckt werden, bis ihre Kopfunterseiten an der Unterseite der Lochplatte anliegen, und sodann von einer weiteren Platte untergriffen werden, die unter der Lochplatte montiert wird, bspw. angeschraubt, derart, dass die Köpfe sich zwischen beiden Platten befinden. Es ist auch noch denkbar, die Dorne 5 und das Basisteil 4 in einem Stück zu gießen oder zu spritzen.

Die Trägeraufnahme 3 kann durch eingeformte Magnete oder durch Bohrungen 6 für die Aufnahme von Schrauben 7 mit einer Grundplatte 8 verbunden werden, und diese wiederum kann auf einem Adapter 9 montiert werden, der schließlich auf einem Drehtisch 10 od. dgl. platziert wird, oder die Trägeraufnahme 3 wird direkt mit einem (herstellerseitig) vorgegebenen Adapter 9 verbunden, bspw. integriert; auch kann die Trägeraufnahme 3 direkt mit einem Drehtisch 10 od. dgl. verbunden werden. Das hier genannte Verbinden kann dabei durch Fügen, also durch Schrauben-, Stift-, Welle-Naben- und Pressverbindungen, sowie durch Kleben, Löt- und/oder Schweißverbindungen sowie ggf. auch magnetisch erfolgen.

Nach vollständiger Positionierung des Probenkörpers 1 kann dieser mittels des CT-Röntgengerätes (Computertomographie), bestehend aus einer Röhre 11 und einem Detektor 12, oder einer anderen, vorzugsweise berührungslos messenden Untersuchungseinrichtung gescannt werden.

Neben Berührungslosen Untersuchungen eignet sich die Erfindungsgemäße Vorrichtung auch für anderweitige Positionierungen, bspw. bei Kontur- und Oberflächenmessverfahren, denn hier wirken nur geringe Kräfte auf die aufgenommen Teile.

Auch zwecks optischer Betrachtung mit einem Mikroskop, insbesondere mit einem Binokular, wobei der Gegenstand im Auflicht betrachtet wird, oder auch nur als Stativ, eignet sich die Vorrichtung.

## Patentansprüche

1. Vorrichtung zur variablen Positionierung eines Probenträgers (2), mit einer Trägeraufnahme (3) zur Abstützung des Probenträgers (2), **dadurch gekennzeichnet, dass** die Trägeraufnahme (3)
a) ein Basisteil (4) aufweist, das zumindest bereichsweise aus einem organischen Material besteht und mit Magneten versehen ist, so dass es auf einer ebenfalls magnetischen oder magnetisierbaren Unterlage verschiebbar und fixierbar ist; sowie
b) eine Mehrzahl von Dornen (5) zum Aufstecken des Probenträgers (2), welche sich von dem Basisteil (4), mit dem sie fest verbunden und insbesondere in welchem sie teilweise eingebettet sind, in einem Raster weg erstrecken und einseitig frei enden.

2. Vorrichtung nach Anspruch 1, **dadurch gekennzeichnet, dass** das Basisteil (4) auf einer Grund- oder Montageplatte oder auf einem Drehtisch oder einem Adapter oder direkt in der Prüf-, Kontroll-, Mess- und/oder Untersuchungseinrichtung magnetisch montierbar ist.

3. Vorrichtung nach Anspruch 1 oder 2, **dadurch gekennzeichnet, dass** das Basisteil (4) eine ebene Unterseite aufweist, die vorzugsweise poliert ist, um ein leichtgängiges Verschieben zu ermöglichen.

4. Vorrichtung nach einem der vorhergehenden Ansprüche, **dadurch gekennzeichnet, dass** das Basisteil (4) eine kreisscheibenförmige Gestalt aufweist, bspw. mit einem Durchmesser von 1 cm oder mehr, vorzugsweise von 2 cm oder mehr, insbesondere von 5 cm oder mehr, und/oder mit einem Durchmesser von 50 cm oder weniger, vorzugsweise von 20 cm oder weniger.

5. Vorrichtung nach Anspruch 4, **dadurch gekennzeichnet, dass** die Höhe des kreisscheibenförmigen Basisteils (4) zwischen 2 mm und 70 mm liegt, vorzugsweise zwischen 3 mm und 50 mm.

6. Vorrichtung nach einem der vorhergehenden Ansprüche, **dadurch gekennzeichnet, dass** das Basisteil (4) eine Grundplatte aus einem anorganischen Material wie bspw. aus Metall oder Stein aufweist.

7. Vorrichtung nach einem der vorhergehenden Ansprüche, **dadurch gekennzeichnet, dass** das Basisteil (4) zumindest bereichsweise aus einem Gießharz besteht.

8. Vorrichtung nach einem der vorhergehenden Ansprüche, **dadurch gekennzeichnet, dass** das Basisteil (4) einen zwei- oder mehrlagigen Aufbau aufweist, wobei sich vorzugsweise oberhalb einer Schicht aus einem anorganischen Material eine Schicht aus einem organischen Material befindet, wobei diese Schichten aus organischem und anorganischem Material insbesondere flächig miteinander verbunden sind, insbesondere dadurch, dass die organische Schicht direkt auf oder an der anorganischen Schicht ausgeformt ist.

9. Vorrichtung nach einem der vorhergehenden Ansprüche, **dadurch gekennzeichnet, dass** die Dorne (5) eine Länge von 70 mm oder weniger aufweisen.

10. Vorrichtung nach einem der vorhergehenden Ansprüche, **dadurch gekennzeichnet, dass** die Dorne (5) unterschiedlich lang ausgeführt sind, so dass deren sämtliche Spitzen nicht innerhalb einer gemeinsamen Ebene liegen und sich die zum Aufstecken erforderliche Druckkraft im Verlauf der Steckbewegung allmählich steigert.

11. Vorrichtung nach einem der vorhergehenden Ansprüche, **dadurch gekennzeichnet, dass** das Basisteil (4) eine vorzugsweise oberseitige Schicht oder Platte aufweist, worin die Dorne (5) eingebettet sind.

12. Vorrichtung nach einem der vorhergehenden Ansprüche, **dadurch gekennzeichnet, dass** die Dorne (5) mit ihren rückwärtigen Enden fest in das Basisteil (4) eingegossen sind, vorzugsweise in Kunststoff, insbesondere in eine Platte aus Kunststoff oder Kunstharz.

13. Vorrichtung nach einem der vorhergehenden Ansprüche, **dadurch gekennzeichnet, dass** die Dornen (5) und das Basisteil (4) durch möglichst gleichzeitiges Gießen oder Spritzen miteinander verbunden sind.

14. Verfahren zur variablen Positionierung eines Probenträgers (2), welcher aus einem geschäumten Material besteht, und auf welchem ein zu untersuchendes Teil (1) festgelegt oder festlegbar ist, an einer Prüf-, Kontroll-, Mess- und/oder Untersuchungseinrichtung, mit einer Trägeraufnahme (3) zur Abstützung des Probenträgers (2), **dadurch gekennzeichnet, dass**
a) ein Basisteil (4) der Trägeraufnahme (3), das zumindest bereichsweise aus einem organischen Material besteht und mit Magneten versehen ist, so dass es auf einer magnetischen oder magnetisierbaren Unterlage verschiebbar und fixierbar ist, auf der Prüf-, Kontroll-, Mess- und/oder Untersuchungseinrichtung montiert wird; und
b) der Probenträger (2) auf eine Mehrzahl von Dornen (5) der Trägeraufnahme (3), welche sich von dem Basisteil (4), mit dem sie fest verbunden oder in welchem sie teilweise eingebettet sind, in einem Raster weg erstrecken und einseitig frei enden, aufgesteckt wird.

## Claims

1. Device for a variable positioning of a specimen holder (2), comprising a holder seating (3) for supporting the specimen holder (2), **characterized in that** the holder seating (3)
a) comprises a base part (4), which consists at least partially of an organic material and is provided with magnets so that it is displaceable and affixable on a magnetic or magnetziable support; as well as
b) a plurality of spikes (5) for pinning on the specimen holder (2), the spikes (5) extending in a grid away from the base part (4) to which they are firmly joined and especially into which they are embedded, and ending freely on one side.

2. Device according to claim 1, **characterized in that** the base part (4) is magnetically mountable to a base or mounting plate or to a rotary table or to an adapter or directly in the checking, controlling, measuring and/or examining installation.

3. Device according to claim 1 or 2, **characterized in that** the base part (4) comprises a plane bottom side which is preferably polished for enabling an effortless displacement.

4. Device according to one of the preceding claims, **characterized in that** the base part (4) is circular disc-shaped, for example with a diameter of 1 cm or more, preferably of 2 cm or more, especially of 5 cm or more, and/or with a diameter of 50 cm or less, preferably of 20 cm or less.

5. Device according to claim 4, **characterized in that** the height of the circular disc-shaped base part (4) is between 2 mm and 70 mm, preferably between 3 mm and 50 mm.

6. Device according to one of the preceding claims, **characterized in that** the base part (4) comprises a base plate made from an inorganic material like metal or stone.

7. Device according to one of the preceding claims, **characterized in that** the base part (4) consists at least partially of a cast resin.

8. Device according to one of the preceding claims, **characterized in that** the base part (3) comprises a structure with two or more layers, wherein preferably a layer made of organic material is situated above a layer made of inorganic material, especially wherein these layers of organic and inorganic material are joined together extensively, especially as a result of the organic layer being directly shaped onto or at the inorganic layer.

9. Device according to one of the preceding claims, **characterized in that** the spikes (5) have a length of 70 mm or less.

10. Device according to one of the preceding claims, **characterized in that** the spikes (5) have different length, so that all their tips are not located within a common plane and the thrust force necessary for the pinning-on is increasing gradually during the course of the pinning movement.

11. Device according to one of the preceding claims, **characterized in that** the base part (4) comprises a layer or plate, preferably on the top, into which the spikes (5) are embedded.

12. Device according to one of the preceding claims, **characterized in that** the spikes (5) are fixedly molded with their rearward ends in the base part (4), preferably in plastics, especially in a plate made of plastics or of synthetic resin.

13. Device according to one of the preceding claims, **characterized in that** the spikes (5) and the base part (4) are joined together by a simultaneous casting or injection moulding.

14. Method for a variable positioning of a specimen holder (2), which consists of a foamed material and to which a part to be examined is affixed or affixable, at a checking, controlling, measuring and/or examining installation, using a holder seating (3) for supporting the specimen holder (2), **characterized in that**
a) a base part (4) of the holder seating (3), which consists at least partially of an organic material and is provided with magnets so that it is displaceable and affixable on a magnetic or magnetziable support, is mounted at the checking, controlling, measuring and/or examining installation; and
b) the specimen holder (2) is pinned on a plurality of spikes (5) of the holder seating (3), which spikes (5) extend in a grid away from the base part (4), to which they are firmly joined or into which they are embedded, and end freely on one side.

## Revendications

1. Dispositif de positionnement variable d'un porte-échantillon (2), avec un logement de support (3) pour le support du porte-échantillon (2), **caractérisé en ce que** le logement de support (3)
a) comporte une partie de base (4) qui est constituée au moins en partie d'un matériau organique et qui est munie d'aimants de sorte qu'elle peut être déplacée et fixée sur un support également magnétique ou magnétisable ; ainsi qu'
b) une pluralité de broches (5) servant à enficher le porte-échantillon (2), lesdites broches s'éloignant et se terminant par une extrémité libre dans une grille de la partie de base (4) avec laquelle elles sont reliées à demeure et en particulier dans laquelle elles sont en partie enrobées.

2. Dispositif selon la revendication 1, **caractérisé en ce que** la partie de base (4) peut être montée magnétiquement sur une plaque de base ou de montage ou sur un plateau rotatif ou un adaptateur ou directement dans le dispositif d'essai, de contrôle, de mesure et/ou d'analyse.

3. Dispositif selon la revendication 1 ou 2, **caractérisé en ce que** la partie de base (4) comporte une face inférieure plane qui de préférence est polie afin de permettre un déplacement aisé.

4. Dispositif selon l'une des revendications précédentes, **caractérisé en ce que** la partie de base (4) a une forme de disque circulaire, par exemple d'un diamètre de 1 cm ou plus, de préférence de 2 cm ou plus, en particulier de 5 cm ou plus, et/ou d'un diamètre de 50 cm ou moins, de préférence de 20 cm ou moins.

5. Dispositif selon la revendication 4, **caractérisé en ce que** la hauteur de la partie de base (4) en forme de disque circulaire est comprise entre 2 mm et 70 mm, de préférence entre 3 mm et 50 mm.

6. Dispositif selon l'une des revendications précédentes, **caractérisé en ce que** la partie de base (4) comporte une plaque de base constituée d'un matériau inorganique comme par exemple de métal ou de pierre.

7. Dispositif selon l'une des revendications précédentes, **caractérisé en ce que** la partie de base (4) est constituée au moins en partie d'une résine moulée.

8. Dispositif selon l'une des revendications précédentes, **caractérisé en ce que** la partie de base (4) présente une structure à deux couches ou multicouche, **en ce qu'**une couche constituée d'un matériau organique se trouve de préférence au-dessus d'une couche en matériau inorganique, **en ce que** ces deux couches constituées de matériau organique et inorganique sont reliées entre elles en particulier en nappe, en particulier **en ce que** la couche organique est formée directement sur ou au niveau de la couche inorganique.

9. Dispositif selon l'une des revendications précédentes, **caractérisé en ce que** les broches (5) sont d'une longueur de 70 mm ou moins.

10. Dispositif selon l'une des revendications précédentes, **caractérisé en ce que** les broches (5) sont de longueur différentes de sorte que toutes leurs pointes ne se trouvent pas dans un plan commun et que la force de compression nécessaire à l'enfichage augmente progressivement au cours du mouvement d'enfichage.

11. Dispositif selon l'une des revendications précédentes, **caractérisé en ce que** la partie de base (4) comporte une couche ou une plaque de préférence sur la face supérieure dans laquelle les broches (5) sont enrobées.

12. Dispositif selon l'une des revendications précédentes, **caractérisé en ce que** les broches (5) avec leurs extrémités arrière sont coulées à demeure dans la partie de base (4), de préférence en matière plastique, en particulier dans une plaque en matière plastique ou en résine synthétique.

13. Dispositif selon l'une des revendications précédentes, **caractérisé en ce que** les broches (5) et la partie de base (4) sont reliées entre elles par moulage par coulée ou par moulage par injection si possible simultané.

14. Procédé de positionnement variable d'un porte-échantillon (2) qui est constitué d'un matériau expansé en mousse, et sur lequel une pièce (1) à analyser est fixée ou peut être fixée sur un dispositif d'essai, de contrôle, de mesure et/ou d'analyse, avec un logement de support (3) pour le support du porte-échantillon (2), **caractérisé en ce qu'**
a) une partie de base (4) du logement de support (3), qui est constituée au moins en partie d'un matériau organique et qui est munie d'aimants de sorte qu'elle peut être déplacée et fixée sur un support magnétique ou magnétisable sur lequel le dispositif d'essai, de contrôle, de mesure et/ou d'analyse est monté ; et
b) le porte-échantillon (2) est enfiché sur une pluralité de broches (5) du logement de support (3), lesdites broches s'éloignant et se terminant par une extrémité libre dans une grille de la partie de base (4) avec laquelle elles sont reliées à demeure ou dans laquelle elles sont en partie enrobées.
